# EUROPÄISCHE PATENTSCHRIFT

(11) **EP 1 293 700 B1**
(45) Veröffentlichungstag und Bekanntmachung des Hinweises auf die Patenterteilung: **02.11.2006**
(21) Anmeldenummer: 02007555.2
(22) Anmeldetag: 03.04.2002
(51) Int. Cl.: F16D 65/18, B60T 13/04

(54) **Zuspanneinrichtung für Scheibenbremsen**
Disc brake actuator
Moteur de frein à disque

(30) Priorität: 16.08.2001 DE 10140076
(43) Veröffentlichungstag der Anmeldung: 19.03.2003
(73) Patentinhaber: WABCO GmbH & Co. OHG, 30453 Hannover (DE)
(72) Erfinder: Gradert, Detlef, 29336 Nienhagen (DE); Binder, Hartmut, Dr., 30657 Hannover (DE)
(74) Vertreter: Schrödter, Manfred

(56) Entgegenhaltungen:
- WO-A-01/44677
- DE-A- 2 905 258
- DE-A- 19 851 668

## Beschreibung

Die Erfindung betrifft eine Zuspanneinrichtung für Scheibenbremsen gemäß dem Oberbegriff des Patentanspruchs 1.

Eine derartige Zuspanneinrichtung ist aus der EP 0 644 358 B1 bekannt.

Bei der bekannten Schrift werden für den Fall einer zugespannten Scheibenbremse die Bremsbeläge und das z. B. als Schwimmsattel ausgebildete Gehäuse für die Zuspannung elastisch verformt. Beläge und Gehäuse bilden so ein Kraftaufnahmesystem, in dem die elastische Verformungsenergie dieser beiden Teile gespeichert ist.

Zur Zuspannung der Scheibenbremse wird bei der bekannten Zuspanneinrichtung aus einem als Federspeicher ausgebildeten und als Kraftpatrone bezeichneten Krafterzeuger Energie auf das Kraftaufnahmesystem übertragen. Zur Energieübertragung ist ein Hebel vorgesehen, der ein Hebellager aufweist, das sich in Bezug auf das Kraftaufnahmesystem an ortsfester Stelle befindet. Der Hebel weist zwei Kraftangriffspunkte auf, einen ersten Kraftangriffspunkt mit vorgegebener Hebellänge, der auf das Kraftaufnahmesystem einwirkt, und einen zweiten Kraftangriffspunkt an einer veränderbaren Position des Hebelarms für die Einwirkung der Kraftpatrone. Zur Veränderung des zweiten Kraftangriffspunktes ist die Kraftpatrone um einen Drehpunkt schwenkbar ausgeführt, wobei eine Verstellvorrichtung zur Einstellung der gewünschten Position des zweiten Kraftangriffspunktes vorgesehen ist.

Die bekannte Einrichtung ermöglicht es, bei einer Umkehr des Arbeitshubes, d. h. bei einer Verringerung der Bremsen-Zuspannung, einen Teil der im Kraftaufnahmesystem enthaltenen elastischen Verformungsenergie zurückzugewinnen und in den energiespeichernden Krafterzeuger einzuspeisen, wodurch sich die Energie im Krafterzeuger um den Anteil der zurückgewonnenen Verformungsenergie erhöht. Mit diesem Prinzip der Energierückgewinnung findet ein wechselseitiges Umspeichern von Energie aus dem Krafterzeuger zum Kraftaufnahmesystem einerseits und von Energie aus dem Kraftaufnahmesystem zum Krafterzeuger andererseits statt. Hierdurch wird bei der bekannten Einrichtung ein guter Wirkungsgrad erreicht.

Die bekannte Einrichtung weist jedoch den Nachteil auf, daß die konstruktive Ausgestaltung eines Hebels mit ortsfestem Hebellager und der für die Verstellung erforderlichen Hebelarmlänge sowie des schwenkbar gelagerten Krafterzeugers mit der für die Verschwenkung erforderlichen Verstelleinrichtung einen vergleichbar großen Bauraum benötigt. Bei den begrenzten räumlichen Einbaubedingungen, wie sie z. B. bei Scheibenbremsen für Kraftfahrzeuge gegeben sind, ist die bekannte Einrichtung daher nur schwer einsetzbar.

Der Erfindung liegt deshalb die Aufgabe zugrunde, eine Zuspanneinrichtung der eingangs genannten Art so zu verbessern, daß unter Beibehaltung der Vorteile der Energierückgewinnung zu ihrer Realisierung ein verringerter räumlicher Bedarf erforderlich ist.

Diese Aufgabe wird durch die im Patenanspruch 1 angegebene Erfindung gelöst. Weiterbildungen und vorteilhafte Ausführungsbeispiele der Erfindung sind in den Unteransprüchen angegeben.

Die Erfindung baut auf der Erkenntnis auf, daß die Hebelanordnung nach der bekannten Schrift eine bestimmte Ausführungsform für ein mechanisches Getriebe mit variablem Übersetzungsverhältnis darstellt. Die erfindungsgemäße Lösung stellt ebenfalls ein mechanisches Getriebe mit variablem Übersetzungsverhältnis dar, das für seine Realisierung jedoch einen im Vergleich zur bekannten Schrift geringeren Bauraum benötigt.

Bei einer Weiterbildung der Erfindung ist der Krafterzeuger ortsfest angeordnet. Dies hat den Vorteil, daß ein Verschwenken des Krafterzeugers, der als Federspeicher ausgebildet ist und aufgrund der starken Federn eine erhebliche Masse aufweist, die sich beim Verschwenken nach dem Prinzip der bekannten Schrift als nachteilige Trägheitskraft auswirkt, nicht erforderlich ist. Bei der bekannten Schrift kann diese Trägheitskraft, die am Massenschwerpunkt des Krafterzeugers angreift, z.B. zu dynamischen Problemen bei einer Bremsenzustellung führen. Dagegen entfällt bei der ortsfesten Anordnung des Federspeichers diese erhebliche Trägheitskraft; Trägheitskräfte treten lediglich durch die Verstellung der Dosiereinrichtungs-Kurvenscheiben auf, die durch die erheblich geringeren Massen der Kurvenscheiben jedoch deutlich reduziert sind.

Die Erfindung wird im folgenden anhand eines Ausführungsbeispiels, das in den Zeichnungen dargestellt ist, näher erläutert.

In den Zeichnungen sind soweit möglich für gleichartige Teile identische Bezugszeichen verwendet, so daß mit der Erläuterung eines Teils in einer Zeichnung dieses Teil auch in anderen Zeichnungen beschrieben ist. Wenn in der Ausführungsform einer Zeichnung bestimmte Varianten [z. B. Ausgestaltungen zur Realisierung einer Feststellbremse] beschrieben sind, so sind diese Varianten auch bei den Ausführungsformen der anderen Zeichnungen anwendbar und nicht separat dort erläutert.

Dabei zeigen
- Fig. 1: die Zuspanneinrichtung unter Verwendung einer Dosiereinrichtung mit zwei translatorisch verstellten Kurvenscheiben,
- Fig. 2: ein Kräftediagramm für die Zuspanneinrichtung nach Fig. 1,
- Fig. 3: die Zuspanneinrichtung unter Verwendung einer Dosiereinrichtung mit zwei rotatorisch verstellten Kurvenscheiben nach dem SchwenkNocken-Prinzip,
- Fig. 4: die Zuspanneinrichtung unter Verwendung einer Dosiereinrichtung mit zwei rotatorisch verstellten Kurvenscheiben nach dem RotationsNocken-Prinzip.

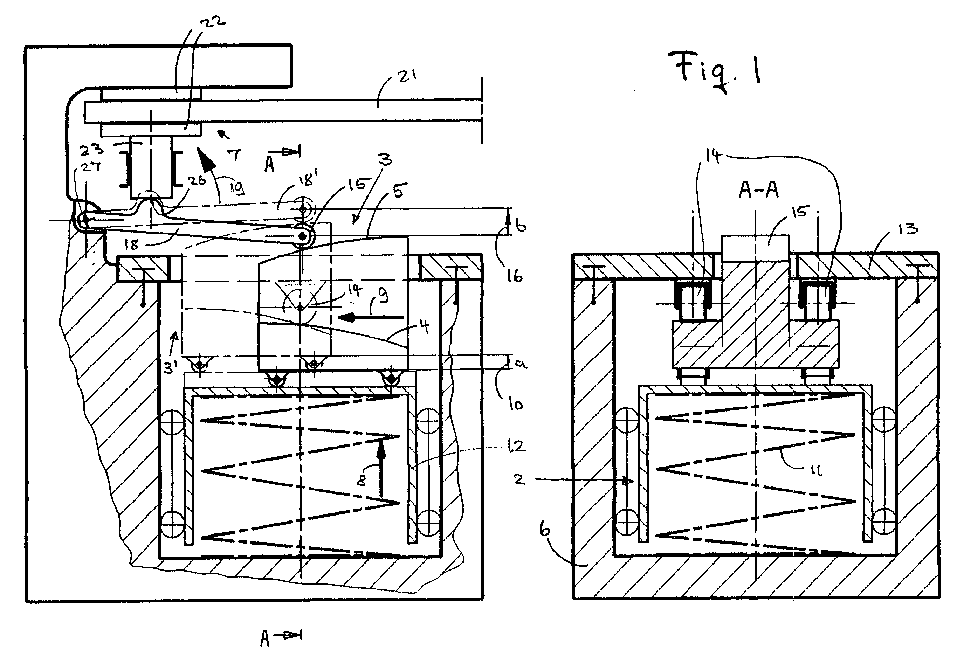

In Fig. 1 sind in einer Darstellung von 2 Schnittebenen folgende mechanische Einheiten vorgesehen:
Ein als Federspeicher ausgebildeter energiespeichernder Krafterzeuger (2), der aus einer vorgespannten Druckfeder (11) und einem Federgehäuse (12) besteht, welches durch eine seitlich angeordnete Rollenlagerung längs der Wandung des Gehäuses (6) in vertikaler Richtung (8) verschieblich ist;
eine in Form eines rollengelagerten, translatorisch verschiebbaren Schlittens ausgebildete Dosiereinrichtung (3) in einstückiger Ausführung, die mit dem Krafterzeuger (2) kraftschlüssig verbunden ist und die mit einer ersten (4) und einer zweiten (5) Kurvenscheibe ausgerüstet ist, welche starr miteinander gekoppelt sind, wobei die erste Kurvenscheibe (4) kraftschlüssig mit dem Gehäuse (6) verbunden ist und wobei sich der Schlitten durch eine aus Übersichtsgründen nicht dargestellte Verstelleinrichtung in horizontaler Richtung (9) auf der Dekkelfläche des Federgehäuses (12) verschieben läßt;
ein als eine Scheibenbremsen-Anordnung ausgebildetes Kraftaufnahmesystem (7) mit einer Bremsscheibe (21), Bremsbelägen (22) und einem Druckstück (23), das über einen Bremshebel (18) kraftschlüssig mit der zweiten Kurvenscheibe (5) verbunden ist.

Durch die Verstelleinrichtung wird der Dosiereinrichtungs-Schlitten (3) entsprechend der Fahrer-Bremsvorgabe in der erläuterten Richtung (9) längs der Verschiebungsachse der Verstelleinrichtung verschoben; die Rollenlagerung ist derart ausgestaltet, daß der Dosiereinrichtungs-Schlitten (3) in allen weiteren Bewegungsrichtungen relativ zur Deckelfläche des Federgehäuses (12) gefesselt ist. Somit ist nur ein Freiheitsgrad vorhanden.

Für eine reibungsarme Ausführung der oben erwähnten Kraftschlüsse der Kurvenscheiben (4) und (5) mit dem Gehäuse (6) bzw. dem Kraftaufnahmesystem (7) sind eine erste (14) und eine zweite (15) Rolle vorgesehen.

Zur Verhinderung eines auf den Dosiereinrichtungs-Schlitten (3) wirkenden Drehmomentes, das vor allem bei der hohen Kraft des Krafterzeugers (2) zu einer Verkantung und zum Verlust der Leichtgängigkeit führen könnte, ist die erste Rolle (14) als Doppelrolle ausgeführt. In Sinne ihrer ihrer logischen Funktionsweise als Abstützung [vergl. unten] wird hier auch ein zusammengehöriges Paar von Rollen als "eine Rolle" beansprucht.

Die erste Rolle (14) ist ortsfest im Gehäuse (6) gelagert [der Gehäusedeckel (13) des eigentlichen Lagerortes für die erste Rolle (4) ist formschlüssig mit dem Gehäuse (6) verbunden] und rollt bei einer horizontalen Verschiebung des Dosiereinrichtungs-Schlittens (3) längs der Oberflächenbahn der ersten Kurvenscheibe (4) ab. Während einer derartigen Verschiebung verändert sich der Hub der Druckfeder (11); dieser Hub wird dadurch bestimmt, auf welchen Punkt der Kurvenbahn-Oberfläche der ersten Kurvenscheibe (4) sich die erste Rolle (14) abstützt.

Der maximale Hub der Druckfeder (11) ergibt sich aus der Höhendifferenz, die die Oberflächen-Kurvenbahn der ersten Kontur (4) zwischen der Ausgangslage [Verschiebung Null] und der Maximallage [Stelle der maximalen Verschiebung] des Dosiereinrichtungs-Schlittens überwindet:
In Fig. 1 ist der Dosiereinrichtungs-Schlitten in der Ausgangslage mit normaler Stärke unter dem Bezugszeichen (3) gezeichnet, und er ist in seiner Maximallage mit dünner Strichstärke unter dem Bezugszeichen (3') gezeichnet, so daß der maximale Hub der Druckfeder (11) gleich dem Abstand a (14) ist [vertikale Verschiebung der Unterkante des Dosiereinrichtungs-Schlittens (3) von der Ausgangsbis zur Maximallage].

Es ändert sich also mit jeder horizontalen Verschiebung des Dosiereinrichtungs-Schlittens (3) der Hub der Druckfeder (11), und der Schlitten führt eine mit der Druckfeder synchrone Hubbewegung aus und dient zur Betätigung des Bremshebels (18). Bei Betätigung des Bremshebels (18) wird die Scheibenbremse (21, 22) über den Bremsnocken (26) und das Druckstück (23) zugespannt.

Die am Bremshebel (18) gelagerte zweite Rolle (15) rollt bei der Verschiebe-Hub-Bewegung des Dosiereinrichtungs-Schlittens (3) längs der Oberflächenbahn der zweiten Kurvenscheibe (5) ab. Analog zu den vorstehenden Ausführungen ist die maximale vertikale Verschiebung [Verschiebung des Bremshebels von der Ausgangslage (18) zur Maximallage (18'), jeweils bezogen auf den Mittelpunkt der zweiten Rolle (15)] der Abstand b (16).

Wie erläutert dient der Krafterzeuger (2) zur Erzeugung des Betätigungshubes für eine Scheibenbremse, wobei beim Durchfahren des Betätigungshubes der Krafterzeuger (2) mit einer veränderbaren Kraft in einer bestimmten Richtung [bei Fig. 1 in vertikaler Richtung (8)] wirkt und die Veränderung der Kraft durch die Dosierungseinrichtung (3) vorgenommen wird, die wiederum von einer auf diese einwirkenden Verstelleinrichtung verändert wird. Der beschriebene Vorgang ist reversibel. Das durch die Scheibenbremse gebildete Kraftaufnahmesystem entwickelt eine hubabhängig veränderte Gegenkraft, die auf einer elastischen Verformung von vorwiegend den Bremsbelägen und weiteren Zuspannelementen wie z. B. dem Bremshebel (18) beruht, und steigt daher im wesentlichen linear mit dem Betätigungshub an bzw. nimmt entsprechend linear mit ihm ab.

Der Krafterzeuger (2) gibt bei einer durch die Verstelleinrichtung veranlaßten Vergrößerung der auf das Kraftaufnahmesystem wirkenden Kraft einen Teil der in ihm gespeicherten Energie [die Vergrößerung des Hubes der Druckfeder (11) führt zur Energieabgabe] ab und nimmt bei einer durch die Verstelleinrichtung veranlaßten Verkleinerung der auf das Kraftaufnahmesystem wirkenden Kraft die von dem Kraftaufnahmesystem aufgenommene Energie zumindest teilweise wieder auf [die Verkleinerung des Hubes der Druckfeder führt zur Energieaufnahme].

Zur Realisierung dieser Energierückgewinnung der im Kraftaufnahmesystem gespeicherten Elastizitätsenergie werden die Konturen der ersten (4) und zweiten (5) Kurvenscheibe geschickt zueinander ausgelegt, wodurch dann das Prinzip der Energieschaukel realisiert wird.

Aus der WO 01/44677 A1 ist bekannt, nach welchen Prinzipien Gleichungen für derartige energieoptimierte Konturen aufzustellen und zu lösen sind, um eine energieoptimierte Zuspannung, d. h. ein funktionsfähiges Energieschaukel-Verhalten, zu erreichen. Für eine derartige Auslegung wird von einer Reibungsfreiheit ausgegangen, die in der Praxis natürlich nur durch eine hinreichende Reibungsarmut näherungsweise zu realisieren ist. Im vorliegenden Fall ergibt sich für die Konturen der ersten (4) und der zweiten (5) Kurvenscheibe eine Kontur von parabolischer Natur.

Die Verstelleinrichtung für den Dosierungs-Schlitten (3) läßt sich auf vielfache Weise realisieren; beispielsweise ist es möglich, einen Zahnstangentrieb vorzusehen, in dem an der unteren Begrenzungsfläche des Dosiereinrichtungs-Schlittens [über den Rollen] eine Zahnstange angebracht ist, die über ein motorgetriebenes Zahnrad translatorisch bewegt wird.

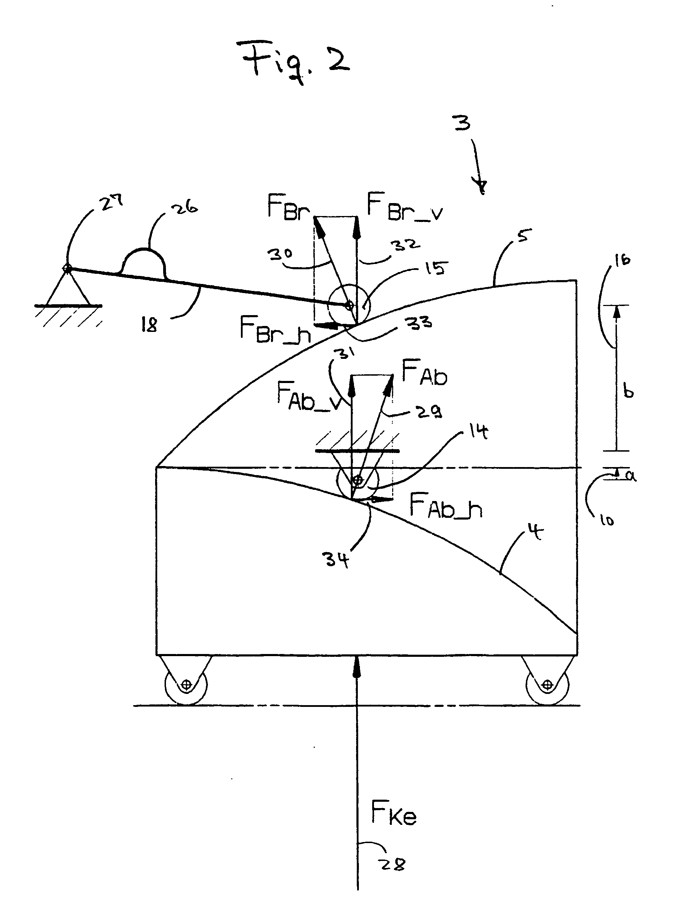

Im Kräftediagramm nach Fig. 2 sind die am Dosiereinrichtungs-Schlitten (3) nach Fig. 1 wirkenden Kraftvektoren für den Fall der energieoptimierten Konturen der ersten (4) und zweiten (5) Kurvenscheibe eingezeichnet. Der in senkrechter Richtung auf den Dosiereinrichtungs-Schlitten (3) einwirkende Kraftvektor F_{**Ke**} wird in zwei Kraftvektoren, einen auf das Gehäuse wirkenden Abstütz-Kraftvektor F_{**Ab**} und einen auf den Bremshebel (18) wirkenden Kraftvektor F_{**Br**} , aufgespaltet.

Die Richtung des durch den Rollenmittelpunkt der ersten Rolle (14) gehenden Abstütz-Kraftvektors F_{**Ab**} ist durch die Tangente an die Kontur der ersten Kurvenscheibe (4) am Rollenberührungspunkt gegeben, und die Richtung des ebenfalls durch den Rollenmittelpunkt der zweiten Rolle (15) gehenden Brems-Kraftvektors F_{**Br**} ist durch die Tangente an die zweite Kurvenscheibe (5) am Rollenberührungspunkt gegeben. Die Summe der senkrechten Kraftkomponente F_{**Br_v**} und F_{**Ab_v**} ist gleich dem Kraftvektor F_{**Ke**} (28).

Im energieoptimierten Zustand muß sich der Schlitten kraftlos von einer zu einer anderen Stelle verschieben lassen, und diese kraftlose Verschiebung ist dann gegeben, wenn für jede Position des Dosiereinrichtungs-Schlittens (3) sich die waagerechten Kraftkomponenten F_{**Ab_h**} (34) und P_{**Br_h**} (33) gegenseitig aufheben. Diese Bedingung kann, alternativ zur vorstehend beschriebenen Rechnung, zur Bestimmung der enegieoptimierten Konturen der ersten (4) und zweiten (5) Kurvenscheibe benutzt werden.

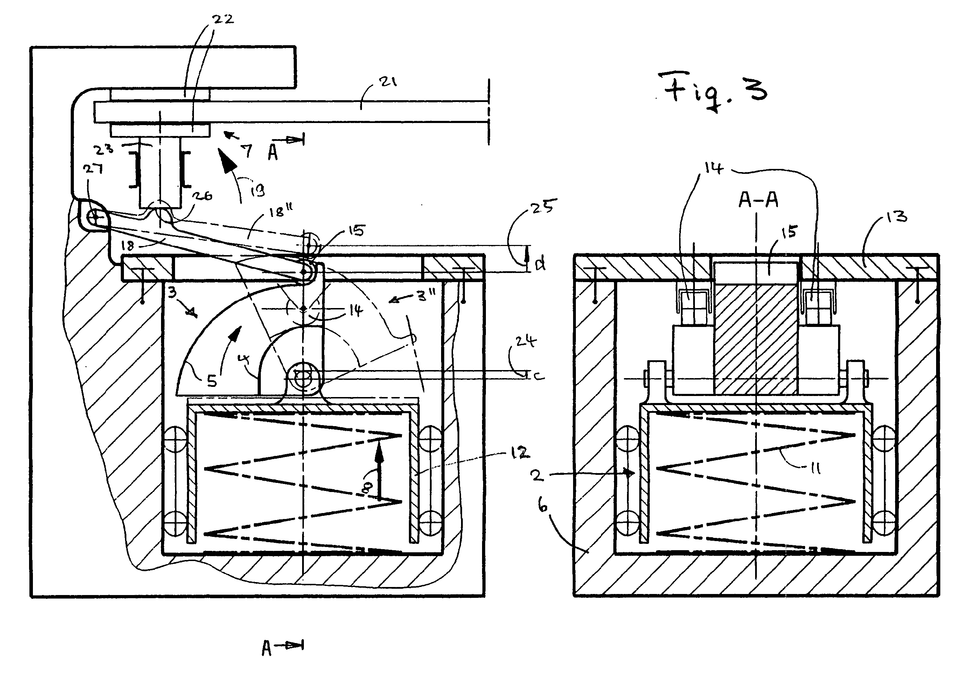

Bei der Zuspanneinrichtung nach Fig. 3 sind der Krafterzeuger (2) und das Kraftaufnahmesystem (7) identisch mit den Ausführungen in Fig. 1. Bei der Dosiereinrichtung (3) werden jedoch die starr miteinander gekoppelten ersten (4) und zweiten (5) Kurvenscheiben nicht mehr translatorisch sondern rotatorisch als Schwenkbewegung verstellt; die Dosierungseinrichtung ist als Dosierungseinrichtungs-Schwenknocken (3) ausgebildet.

Die kraftschlüssige Verbindung der Kurvenscheiben (4) und (5) über die erste (14) und zweite (15) Rolle entspricht der unter Fig. 1 erläuterten Ausführung, so daß auch die dort beschriebene Funktionsweise, daß mit der Verstellung der Dosiereinrichtung [in Fig. 3 Verschwenken des Dosiereinrichtungs-Nockens (3)] sich der Hub der Druckfeder (11) erhöht und der Nocken mit der Druckfeder eine synchrone Bewegung ausführt, welche zur Betätigung des Bremshebels (18) dient.

Die Verschwenkung des Dosiereinrichtungs-Nockens liegt zwischen [rechtsdrehend (17)] 0° der Ausgangslage und 90° der Maximallage. In Fig. 3 ist der Dosiereinrichtungs-Schwenknocken in der Ausgangslage mit normaler Stärke unter dem Bezugszeichen (3) gezeichnet, und er ist mit dünner Strichstärke unter dem Bezugszeichen (3'') bei einem Schwenkwinkel von etwa 2/3 der Maximallage gezeichnet [aus Gründen der Deutlichkeit, da in der Maximallage Linien zusammenfallen, was das Verständnis der Funktion beeinträchtigt]. Bei dieser gezeichneten Bremslage (3'') hat sich durch den Hub der Druckfeder (11) die Mittellinie um einen Abstand c (24) in vertikaler Richtung (8) verschoben, was zu einer vertikalen Verschiebung des Bremshebels um den Abstand d (25) relativ zur Ausgangslage führt.

Die Kontur der ersten Kurvenscheibe (4) ist nicht kreisbogenförmig, sondern sie hat eine besondere Form, die sich dadurch auszeichnet, daß in Richtung der Maximalstellung ein Gefälle vorliegt. Würde also auf die zweiten Kurvenscheibe (5) keine Kraft einwirken [der Bremshebel (18) mit der zweiten Rolle (15) sei weggelassen], so würde durch die Wirkung des Krafterzeugers (2) der Dosierungseinrichtungs-Schwenknocken (3) in die Maximalstellung verschwenkt.

Die Kontur der zweiten Kurvenscheibe (5) ist ebenfalls nicht kreisbogenförmig ausgebildet, sondern ihre besondere Form zeichnet sich dadurch aus, daß sie in Richtung der Ausgangslage ein Gefälle hat. Würde nur der Bremshebel (18) mit der zweiten Rolle (15) auf die Dosiereinrichtung einwirken [die Druckfeder (11) sei weggelassen, so daß keine Kraft auf die erste Kurvenscheibe (4) wirkt], so würde durch die Wirkung der zweiten Kontur (5) der Dosiereinrichtungs-Schwenknocken (3) in seine Ausgangslage zurückgeschwenkt.

Das Kraftaufnahmesystem (7) erzeugt also auf dem Dosiereinrichtungs-Schwenknocken (3) ein linksdrehendes Moment, während der Krafterzeuger (2) auf den Dosierungseinrichtungs-Schwenknocken (3) ein rechtsdrehendes Moment ausübt.

Wie in der Ausführungsform nach Fig. 1 läßt sich durch entsprechende Auslegung der Konturen der ersten (4) und zweiten (5) Kurvenscheibe das Prinzip der Energieschaukel realisieren. Hierbei sind die Konturen für die Kurvenscheiben (4) und (5) derart auszulegen, daß das resultierende Drehmoment um die Schwenkachsen-Mittellinie (20) für jeden Schwenkwinkel des Dosierungseinrichtungs-Schwenknockens (3) zu Null wird; in diesem Fall ist eine ideale Energieschaukel realisiert, d. h. es wird verlustfrei Energie aus dem Krafterzeuger (2) in das Kraftaufnahmesystem (7) übertragen und umgekehrt.

Alternativ zu der Bestimmung der energieoptimalen Konturen für die erste (4) und zweite (5) Kurvenscheibe nach dem Momentengleichgewicht lassen sich die Kurven auch, wie in den Erläuterungen zu Fig. 1 angedeutet, durch Lösung mathematischer Gleichungen, die nach energieoptimierten Bedingungen angesetzt sind, bestimmen.

Bei der praktischen Auslegung des Dosierungseinrichtungs-Schwenknockens (3) können verschiedene Parameter die Auslegung positiv beeinflussen, wie z. B. die Radien, auf denen die Konturen der Kurvenscheiben (4) und (5) an ihren jeweiligen Rollen aufsetzen. Es kann auch vorteilhaft sein, die Rollen (14) und (15), die in Fig. 3 senkrecht über der Schwenkachsen-Mittellinie (20) stehen, etwas seitlich zu versetzen, um das Momentengleichgewicht des Nockens um die Mittellinie (20) vorteilhaft zu beeinflussen.

Bei der Bestimmung der Kontur für die erste Kurvenscheibe (4) kann es vorteilhaft sein, diese so auszuformen, daß bei der Maximalstellung diese Rolle "in der Luft schwebt", um sicher die gesamte Kraft des Krafterzeugers (2) in die Bremsbeläge (22) der Scheibenbremse zu überführen.

Die Funktion einer Feststellbremse läßt sich einfach dadurch realisieren, indem in der Maximalstellung in der Kontur der zweiten Kuvenscheibe (5) eine Delle vorgesehen ist, in die die zweite Rolle (15) einrastet [die Dellen-Rastung ist auch an der der ersten Kuvenscheibe (4) realisierbar]. Alternativ kann die Feststellbremse auch dadurch realisiert werden, indem in der Maximalstellung die zweite Kurvenscheibe (5) [oder auch die erste Kuvenscheibe (4)] durch einen Stift, der z. B. mit Hilfe eines Hubmagneten zu betätigen ist, relativ zum Gehäuse (6) fixiert wird. Derartige Fixierungen können auch in der Ausgangsstellung angebracht werden, und vorteilhaft zum Transport und/oder zur Montagesicherung verwendet werden.

Es kann es vorteilhaft sein, die Funktion der Feststellbremse [entweder nach dem "Dellen"-Prinzip oder dem Prinzip der Stiftfixierung] nicht auf eine der beiden Kurvenscheiben (4) oder (5) zu legen, sondern hierfür eine weitere, mit den Kurvenscheiben (4) und (5) synchron verschwenkbare Kurvenscheibe vorzusehen. Bei einer solchen Lösung müssen dann nämlich an den beiden genau ausgelegten energieoptimierten Konturen der Kurvenscheiben (4) und (5) keinerlei Veränderungen vorgenommen werden.

In der unter Fig. 3 gezeigten Ausführungsform findet durch den Bremshebel (18) eine Kraftübersetzung durch das Verhältnis des Abstandes des Rollenmittelpunktes der zweiten Rolle (15) vom Bremshebel-Drehpunkt (27) zum Abstand des Bremsnockens (26) vom Bremshebel-Drehpunkt (27) statt. Wenn bei einer bestimmten Auslegung auf eine solche Kraftverstärkung verzichtet werden kann, so ist es auch möglich, die Bremse direkt durch die Dosiereinrichtung anzusteuern. In diesem Fall ist der Bremshebel (18) weggelassen, und die zweite Rolle (15) ist direkt am Druckstück (23) drehbar gelagert.

Bei der letztgenannten Ausführungsform kann die mechanische Kraftübertragung auch durch eine hydraulische Kraftübertragung ersetzt werden. Dies ist besonders dann vorteilhaft, wenn die erfindungsgemäße Zuspannvorrichtung an eine bestehende Hydraulik-Radbremse angeschlossen werden soll. Der Hydraulik-Bremszylinder der Radbremse wird über eine Hydraulikleitung an einen formschlüssig mit dem Gehäuse (6) verbunden Hydraulik-Geberzylinder angeschlossen, an dessen Kolben die zweite Rolle (15) drehbar befestigt ist, so daß die zweite Rolle (15), wie in Fig. 3 dargestellt, bei einer Bremsbetätigung über der zweiten Kurvenscheibe (5) abrollt.

Diese Lösung kann generell immer dort vorteilhaft sein, wo aus Platzgründen der Krafterzeuger (2) nicht direkt am Rad untergebracht werden kann. Die Nachstellung der Bremse kann dann z. B. durch die heutige Öl-Nachfülltechnik realisiert werden, wobei natürlich eine "trokkene Nachstellung" immer vorzuziehen ist.

Bei der Ausbildung der Dosiereinrichtung als Dosiereinrichtungs-Schwenknocken (3) nach Fig. 3 verschwenkt die aus Übersichtsgründen nicht dargestellte Verstelleinrichtung diesen Nocken über die Achse der Schwenkachsen-Mittellinie (20). Die Verstelleinrichtung ist also als rotatorische Einrichtung ausgeführt, wobei ihre Drehachse senkrecht zur Achse des Krafterzeugers (2) angeordnet ist [der Kraftvektor F_{**Ke**} wirkt längs der Mittelachse des Krafterzeugers (2) auf die Dosiereinrichtung (3) ein; vergleiche hierzu Fig. 2].

Die Verstelleinrichtung für die Ausführungsform nach Fig. 3 wird durch einen elektrischen Schwenkmotor gebildet, der z. B. durch einen Kegelradmotor realisiert ist, bei dem ein am Motor befestigtes Kegelrad in ein am Dosiereinrichtungs-Nocken (3) befestigtes Kreisring-Zahnstangenelement eingreift. Der Verstellmotor ist dabei ortsfest am Deckel des Federgehäuses (12) befestigt und macht, wie auch die Kurvenscheiben (4) und (5), die Hubbewegungen des Krafterzeugers (2) mit.

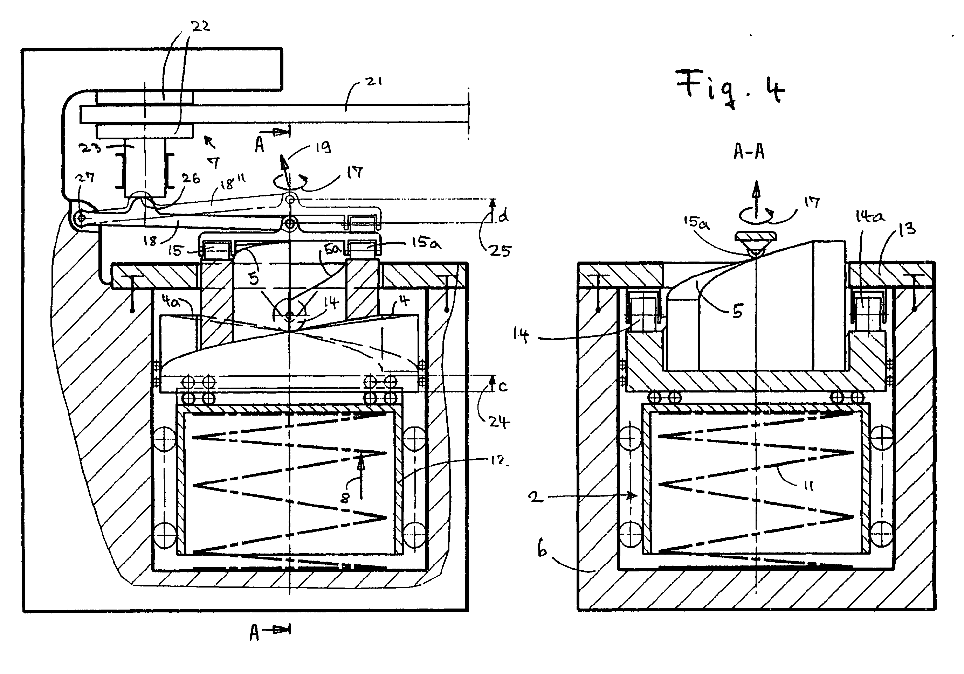

Bei der nach dem Rotations-Nocken-Prinzip aufgebauten Dosiereinrichtung (3) nach Fig. 4 ist auf dem Krafterzeuger (2) der vorstehend beschriebenen Art eine Anordnung auf einer kreisrunden Scheibe mit einem ersten (4, 4a) und einem zweiten (5, 5a) Kurvenscheiben-Paar angeordnet. Jede Kurvenscheibe überdeckt ein Winkelsegment von 180°, so daß von den jeweils zusammengehörenden Kurvenscheiben der gesamte Kreisbogen von 360° abgedeckt ist.

Die Kurvenscheiben sind hier als zusammengehörende Paare ausgebildet, sie entsprechen jedoch in ihrer Funktion den einzelnen Kurvenscheiben, wie sie in Fig. 1 und Fig. 3 erläutert sind. Wie bereits bei der Ausgestaltung einer Rolle als Doppelrolle [Rollenpaar] erläutert, dient auch die paarweise Ausgestaltung einer Kurvenscheibe lediglich zur Verhinderung von Drehmomenten, die vor allem bei den in einer derartigen Zuspanneinrichtung wirkenden hohen Kräfte, zu einer Verklemmung der Einrichtung führen könnten. In diesem Sinne wird auch ein zusammengehöriges Paar von Kurvenscheiben entsprechend ihrer logischen Funktionsweise als "eine Kurvenscheibe" beansprucht.

Das erste Kurvenscheiben-Paar (4, 4a) stützt sich auf dem gehäusefest gelagerten ersten Rollenpaar (14, 14a) ab.

Zur Bremsbetätigung wird die Dosiereinrichtung (3) von der nicht dargestellten Verstelleinrichtung in rechtsdrehender Richtung (17) von 0° [Ausgangslage] bis 180° [Maximallage] verschwenkt; in Fig. 4 ist der Dosiereinrichtungs-Rotationsnocken (3) in einer Verschwenkung von 90° gezeigt [halber Maximalbetätigungs-Winkel]. Im Verlauf dieser Verdrehung rollt das erste Rollenpaar (14, 14a) auf den Oberflächenbahnen des ersten Kurvenscheiben-Paares (4, 4a) mit ihrem Gefälle ab und entsprechend des "Höhenverlustes" erhöht sich der Hub der Druckfeder (11), und der Dreheinrichtungs-Rotationsnocken (3) wird synchron mit dieser Hubvergrößerung angehoben. In der dargestellten Verschwenkung von 90° ist diese vertikale Verschiebung [Federhub] der Abstand c (24).

Bei der erläuterten Verdrehung des Dosiereinrichtungs-Rotationsnockens (3) rollt das zweite Rollenpaar (5, 5a) auf den Oberflächen des zweiten Kurvenscheiben-Paars (15, 15a) ab, wobei durch die positive Steigung dieses Paars ein zusätzlicher "Höhengewinn" entsteht und damit der Abstand d (25) zur Betätigung des Bremshebels (18) gegenüber dem Federhub c (24) zusätzlich vergrößert ist [Hubverstärkung].

Die Winkelsegmente der Kurvenscheiben-Paare (4, 4a) und (5, 5a) von im Ausführungsbeispiel 180° [maximale Auflösung für den maximal möglichen Zuspann-Drehwinkel von 180°] können auch kleiner gewählt werden; jedes Winkelsegment zwischen 0° und 180° ist hierbei möglich, wobei die Winkelsegmente für beide Kurvenscheiben-Paare identisch gewählt sein müssen.

Für die Verstelleinrichtung ist ein am Federgehäuse (12) befestigter Elektromotor vorgesehen, der über ein Getriebe den Verstelleinrichtungs-Rotationsnocken (3) relativ zum Krafterzeuger (2) verdreht [die Rollenlagerung des Krafterzeugers (2) ist derart ausgebildet, daß dieser gegenüber dem Gehäuse (6) drehgesichert ist]. Das Getriebe kann dabei als Ketten-, Stirn-, Kegelradoder Planetengetriebe ausgestattet sein, wobei auch andere Antriebsarten denkbar sind.

Bei der Ausbildung der Dosiereinrichtung als Dosiereinrichtungs-Rotationsnocken (3) nach Fig. 4 verdreht die als rotatorische Einrichtung ausgebildete Verstelleinrichtung diesen Nocken längs einer Drehachse, die idetisch ist zur Achse des Krafterzeugers (2). Dadurch und durch die rotationsymmetrische Ausbildung des Dosiereinrichtungs-Drehnockens (3) wird vorteilhafterweise verhindert, daß ein auf den Krafterzeuger (2) einwirkendes Kippmoment überhaupt entstehen kann [bei der Auführung nach Fig. 1 bildet sich ein solches Kippmoment in gewissem Umfang aus, und bei der Auführung nach Fig. 3 wird dieses Kippmoment bei der energieoptimierten Ausführung der beiden Kurvenscheiben zu Null].

## Patentansprüche

1. Zuspanneinrichtung für Scheibenbremsen, **gekennzeichnet durch** die folgenden Merkmale:
a) Es ist eine Krafterzeugungseinrichtung (2) zur Erzeugung eines Betätigungshubes für eine Scheibenbremse vorgesehen;
b) beim Durchfahren des Betätigungshubes wirkt die Krafterzeugungseinrichtung (2) mit veränderbarer Kraft in einer bestimmten Richtung, wobei der Betrieb reversibel ist;
c) die Krafterzeugungseinrichtung wirkt auf ein Kraftaufnahmesystem (7) ein, welches eine sich hubabhängig verändernde Gegenkraft entwickelt;
d) die Veränderung der Gegenkraft beruht auf einer elastischen Verformung und steigt im wesentlichen linear an bzw. nimmt entsprechend linear ab;
e) es ist eine Dosiereinrichtung (3) zur Veränderung der auf das Kraftaufnahmesystem (7) wirkenden Kraft vorgesehen;
f) es ist eine auf die Dosiereinrichtung (3) einwirkende Verstelleinrichtung vorgesehen;
g) die Krafterzeugungseinrichtung (2) ist so ausgebildet, daß sie bei einer **durch** die Verstelleinrichtung veranlaßten Vergrößerung der auf das Kraftaufnahmesystem wirkenden Kraft einen Teil der in ihr gespeicherten Energie abgeben kann;
h) die Krafterzeugungseinrichtung (2) ist so ausgebildet, daß sie bei einer **durch** die Verstelleinrichtung veranlaßten Verkleinerung der auf das Kraftaufnahmesystem wirkenden Kraft die von dem Kraftaufnahmesystem aufgenommene Energie zumindest teilweise wieder aufnehmen kann;
**gekennzeichnet durch** die folgenden Merkmale:
i) Die Dosiereinrichtung (3) ist kraftschlüssig mit der Krafterzeugungseinrichtung (2) verbunden;
k) die Dosiereinrichtung ist unter Verwendung von mindestens zwei starr miteinander gekoppelten Kurvenscheiben (4, 5) realisiert.

2. Einrichtung nach Anspruch 1, **dadurch gekennzeichnet, daß** die Dosiereinrichtung (3) in einstückiger Ausführung zwischen der Krafterzeugungseinrichtung (2) und dem Kraftaufnahmesystem (7) angeordnet ist.

3. Einrichtung nach Anspruch 1 oder 2, **gekennzeichnet durch** die folgenden Merkmale:
a) für die Dosiereinrichtung (3) sind zwei Kurvenscheiben vorgesehen;
b) eine erste Kurvenscheibe (4) ist mit dem Gehäuse (13) kraftschlüssig verbunden;
c) eine zweite Kurvenscheibe (5) ist mit dem Kraftaufnahmesystem (7) kraftschlüssig verbunden;
d) die erste (4) und die zweite (5) Kurvenscheibe weisen eine unterschiedliche Charakteristik auf.

4. Einrichtung nach Anspruch 3, **dadurch gekennzeichnet, daß** eine synchrone Betätigung der Kurvenscheiben (4, 5) durch die Verstelleinrichtung vorgesehen ist.

5. Einrichtung nach Anspruch 3, **dadurch gekennzeichnet, daß** die Verstelleinrichtung als translatorische Einrichtung ausgeführt ist.

6. Einrichtung nach Anspruch 1, **dadurch gekennzeichnet, daß** die Verstelleinrichtung als rotatorische Einrichtung ausgeführt ist.

7. Einrichtung nach Anspruch 6, **dadurch gekennzeichnet, daß** die Drehachse der Verstelleinrichtung parallel zur Achse der Krafterzeugungseinrichtung angeordnet ist.

8. Einrichtung nach Anspruch 6, **dadurch gekennzeichnet, daß** die Drehachse der Verstelleinrichtung senkrecht zur Achse der Krafterzeugungseinrichtung angeordnet ist.

9. Einrichtung nach mindestens einem der Ansprüche 1 bis 8, **dadurch gekennzeichnet, daß** die Krafterzeugungseinrichtung ortsfest gegenüber dem Kraftaufnahmesystem angeordnet ist.

10. Einrichtung nach mindestens einem der Ansprüche 1 bis 9, **gekennzeichnet durch** die folgenden Merkmale:
a) die Dosiereinrichtung (3) ist so ausgebildet, daß bei Vergrößerung der auf das Kraftaufnahmesystem (7) wirkenden Kraft der Betrag des von der Krafterzeugungseinrichtung (2) abgegebenen Energieanteils gleich dem Betrag des vom Kraftaufnahmesystem (7) aufgenommenen Energieanteils ist, wobei die Vorzeichen des von der Krafterzeugungseinrichtung abgegebenen und des vom Kraftaufnahmesystem (7) aufgennommenen Energieanteils unterschiedlich sind;
b) in der Dosiereinrichtung (3) sind zwei Konturen vorgesehen, eine erste Kontur zur Abgabe des Energieanteils aus der Krafterzeugungseinrichtung (2) und eine zweite Kontur zur Aufnahme des Energieanteils vom Kraftaufnahmesystem (7);
c) die erste Kontur ist **durch** die Stützfläche der ersten Kurvenscheibe (4) gebildet;
d) die zweite Kontur ist **durch** die Stützfläche der zweiten Kurvenscheibe (5) gebildet.

## Claims

1. Actuating device for disc brakes, **characterized by** the following features:
a) a force-generating device (2) is provided for generating an actuating stroke for a disc brake;
b) during execution of the actuating stroke, the force-generating device (2) acts with a variable force in a defined direction, the operation being reversible;
c) the force-generating device acts on a force take-up system (7), which develops an opposing force that varies as a function of the stroke;
d) the variation of the opposing force depends on elastic deformation and increases substantially linearly or decreases correspondingly linearly;
e) a proportioning device (3) is provided for varying the force acting on the force take-up system (7);
f) an adjusting device which acts on the proportioning device (3) is provided;
g) the force-generating device (2) is so constructed that, during an increase, caused by the adjusting device, of the force acting on the force take-up system, it can liberate part of the energy stored in it;
h) the force-generating device (2) is so constructed that, during a decrease, caused by the adjusting device, of the force acting on the force take-up system, it can take back at least part of the energy received by the force take-up system;
**characterized by** the following features:
i) the proportioning device (3) has a force-based connection to the force-generating device (2);
k) the proportioning device is implemented using at least two cam discs (4, 5) which are rigidly coupled to one another.

2. Device according to claim 1, **characterized in that** the proportioning device (3) is arranged in a one-piece configuration between the force-generating device (2) and the force take-up system (7).

3. Device according to claim 1 or 2, **characterized by** the following features:
a) two cam discs are provided for the proportioning device (3);
b) a first cam disc (4) has a force-based connection to the housing (13);
c) a second cam disc (5) has a force-based connection to the force take-up system (7);
d) the first (4) and the second (5) cam discs have different characteristics.

4. Device according to claim 3, **characterized in that** synchronous actuation of the cam discs (4, 5) by the adjusting device is provided.

5. Device according to claim 3, **characterized in that** the adjusting device is constructed as a translational device.

6. Device according to claim 1, **characterized in that** the adjusting device is constructed as a rotational device.

7. Device according to claim 6, **characterized in that** the axis of rotation of the adjusting device is arranged parallel to the axis of the force-generating device.

8. Device according to claim 6, **characterized in that** the axis of rotation of the adjusting device is arranged perpendicular to the axis of the force-generating device.

9. Device according to at least one of claims 1 to 8, **characterized in that** the force-generating device is arranged in fixed position relative to the force take-up system.

10. Device according to at least one of claims 1 to 9, **characterized by** the following features:
a) the proportioning device (3) is so constructed that, during an increase of the force acting on the force take-up system (7), the magnitude of the energy component liberated by the force-generating device (2) is equal to the magnitude of the energy component received by the force take-up system (7), the signs of the energy component liberated by the force-generating device and of the energy component received by the force take-up system (7) being different;
b) two profiles are provided in the proportioning device (3): a first profile for the liberation of the energy component from the force-generating device (2) and a second profile for the receiving of the energy component by the force take-up system (7);
c) the first profile is formed by the bearing surface of the first cam disc (4);
d) the second profile is formed by the bearing surface of the second cam disc (5).

## Revendications

1. Actionneur de freins à disque, **caractérisé par** les caractéristiques suivantes :
a) il est prévu un dispositif générateur de force (2) destiné à générer une course de commande d'un frein à disque ;
b) lors de l'exécution de la course de commande, le dispositif générateur de force (2) agit avec une force variable dans une direction définie, le fonctionnement étant réversible ;
c) le dispositif générateur de force (2) agit sur un système d'absorption de force (7), lequel développe une force de réaction variable en fonction de la course ;
d) la variation de la force de réaction est basée sur une déformation élastique et croît de manière sensiblement linéaire ou décroît linéairement de manière correspondante ;
e) il est prévu un dispositif de dosage (3) destiné à faire varier la force agissant sur le système d'absorption de force (7) ;
f) il est prévu un dispositif de réglage agissant sur le dispositif de dosage (3) ;
g) le dispositif générateur de force (2) est réalisé de telle sorte qu'il peut fournir une partie de l'énergie emmagasinée en lui, lorsque la force agissant sur le système d'absorption de force est amplifiée à la suite d'une instruction du dispositif de réglage,.
h) le dispositif générateur de force (2) est réalisé de telle sorte qu'il peut à nouveau absorber, au moins partiellement, l'énergie absorbée par le système d'absorption de force, lorsque la force agissant sur le système d'absorption de force est réduite à la suite d'une instruction du dispositif de réglage;
**caractérisé par** les caractéristiques suivantes :
i) le dispositif de dosage (3) est assemblé par conjugaison de force au dispositif générateur de force (2) ;
k) le dispositif de dosage (3) est réalisé moyennant une utilisation d'au moins deux cames (4, 5) couplées l'une à l'autre de manière rigide.

2. Dispositif selon la revendication 1, **caractérisé en ce que** le dispositif de dosage (3) est réalisé d'un seul tenant entre le dispositif générateur de force (2) et le système d'absorption de force (7).

3. Dispositif selon la revendication 1 ou 2, **caractérisé par** les caractéristiques suivantes :
a) deux cames sont prévues pour le dispositif de dosage (3) ;
b) une première came (4) est assemblée par conjugaison de force au boîtier (13) ;
c) une deuxième came (5) est assemblée par conjugaison de force au système d'absorption de force (7) ;
d) la première came (4) et la deuxième came (5) ont une caractéristique différente.

4. Dispositif selon la revendication 3, **caractérisé en ce qu'**un fonctionnement synchrone des cames (4, 5) est prévu au moyen du dispositif de réglage.

5. Dispositif selon la revendication 3, **caractérisé en ce que** le dispositif de réglage est réalisé sous forme de dispositif à mouvement de translation.

6. Dispositif selon la revendication 1, **caractérisé en ce que** le dispositif de réglage est réalisé sous forme de dispositif à mouvement rotatoire.

7. Dispositif selon la revendication 6, **caractérisé en ce que** l'axe de rotation du dispositif de réglage est parallèle à l'axe du dispositif générateur de force.

8. Dispositif selon la revendication 6, **caractérisé en ce que** l'axe de rotation du dispositif de réglage est perpendiculaire à l'axe du dispositif générateur de force.

9. Dispositif selon au moins l'une des revendications 1 à 8, **caractérisé en ce que** le dispositif générateur de force est agencé de manière stationnaire par rapport au système d'absorption de force.

10. Dispositif selon au moins l'une des revendications 1 à 9, **caractérisé par** les caractéristiques suivantes :
a) le dispositif de dosage (3) est agencé de telle sorte qu'en cas d'amplification de la force agissant sur le système d'absorption de force (7), la quantité de la fraction d'énergie fournie par le dispositif générateur de force (2) est égale à la quantité de la fraction d'énergie absorbée par le système d'absorption de force (7), les signes des fractions d'énergie fournies par le dispositif générateur de force (2) et absorbées par le système d'absorption de force (7) étant différents ;
b) dans le dispositif de dosage (3) sont prévus deux contours, un premier contour destiné à fournir la fraction d'énergie à partir du dispositif générateur de force (2) et un deuxième contour destiné à absorber la fraction d'énergie par le système d'absorption de force (7) ;
c) le premier contour est formé par la surface d'appui de la première came (4) ;
d) le deuxième contour est formé par la surface d'appui de la deuxième came (5).
